# EUROPEAN PATENT APPLICATION

(11) **EP 2 623 477 A1**
(43) Date of publication of application: **07.08.2013**
(21) Application number: 11829121.0
(22) Date of filing: 27.09.2011
(51) Int. Cl.: C04B 22/14, C04B 22/06, C04B 24/04, C04B 28/02, C04B 103/12

(54) **QUICK-SET AGENT FOR HYDRAULIC BINDER AND METHOD FOR RAPIDLY CURING HYDRAULIC BINDER**

(30) Priority: 27.09.2010 JP 2010215266
(71) Applicant: Sika Technology AG, 6340 Baar (CH)
(72) Inventor: LINDLAR Benedikt, CH-6340 Baar (CH); MÄDER Urs, CH-6340 Baar (CH); GOTO Katsuhiko, Hiratsuka-shi, Kanagawa 254-0021 (JP); ISHIDA Ryohei, Hiratsuka-shi, Kanagawa 254-0021 (JP); GORYOZONO Yuji, Hiratsuka-shi, Kanagawa 254-0021 (JP)
(74) Representative: Sika Patent Attorneys
(86) International application number: PCT/JP2011/072088
(87) International publication number: WO 2012/043568

(57) **Abstract**

In the present invention, a hydraulic binder is rapidly cured using either: (1) a liquid quick-setting agent for a hydraulic binder, comprising aluminum sulfate or a hydrate thereof, an aluminum oxide or hydroxide, at least one organic acid, at least one alkaline earth metal oxide or hydroxide, and water; or (2) a combination of (A) a liquid quick-setting agent which contains aluminum sulfate or a hydrate thereof, an aluminum oxide or hydroxide, at least one organic acid, at least one alkaline earth metal oxide or hydroxide, and water; with (B) a non-slurry auxiliary quick-setting agent which contains powdery aluminum sulfate or a hydrate thereof. In accordance with the present invention, a quick-setting agent system which is easy to use, produces little dust, is non-alkaline, and is capable of exhibiting good curing properties even under conditions which are difficult to carry out construction with conventional quick-set concrete.

## Description

### TECHNICAL FIELD

The present application is based upon and claims the benefit of priority from Japanese Patent Application No. 2010-215266, filed on September 27, 2010, the entire content of which is incorporated herein by reference.

The present invention relates to a quick-setting (quick-set) agent for rapidly curing a hydraulic binder such as cement, concrete, mortar, and a mixture thereof, and a method for rapidly curing a hydraulic binder.

### BACKGROUND ART

In order to prevent the collapse of rocks in an excavation operation for tunnels and the like or in order to prevent slope failure around roads, quick-settable concrete in which a quick-setting agent is blended in concrete or the like has been sprayed on the rocks or slopes, as described in Japanese Unexamined Patent Application, First Publication No. H09-19910.

In the aforementioned spraying method, usually, cement, aggregates, water and the like are mixed in a concrete-production apparatus to prepare shotcrete, the shotcrete is carried to a field site by means of a mixer vehicle, a quick-setting agent in the form of powder is mixed in the shotcrete during air-conveying the concrete to a spraying machine, and a quick-settable shotcrete is sprayed on the specified part. The quick-settable shotcrete can be cured within a short period of time, and for this reason, operation time can be reduced.

However, in the case of using a quick-setting agent in the form of powder, a lot of equipment is required, and a working environment is deteriorated so that leakage of a quick-setting agent may occur during air-conveying concrete, a quick-setting agent may be scattered to form dust in the air without being sufficiently mixed in the concrete.

A conventional quick-setting agent has an aluminic acid compound as a main ingredient, and is strongly alkaline. For this reason, the quick-setting agents may negatively impact on skin, organs of respiration apparatuses, and eyes of operators during spraying operation. In addition, the alkaline components may elute after a quick-settable concrete is cured, and may pollute the surrounding environment.

In addition, when the temperature of concrete is low, or when spring water is present, a curing period relatively lengthens even if a quick-settable concrete is sprayed. Therefore, necessary strength may not be obtained within a short period of time.

### Prior Art Documents

### Patent Documents

Patent Document 1: Japanese Unexamined Patent Application, First Publication No. H09-19910

### DISCLOSURE OF INVENTION

### Technical Problems

The present invention has been made in view of the problems of the aforementioned prior art. The objective of the present invention is to provide a quick-setting agent system which is easy to use, produces little dust, is non-alkaline, and is capable of exhibiting good curing properties even under conditions which are difficult to carry out construction with conventional quick-set concrete.

### Technical Solution

The objective of the present invention can be achieved by:
(1) a liquid quick-setting agent for a hydraulic binder, which contains aluminum sulfate or a hydrate thereof, an aluminum oxide or hydroxide, at least one organic acid, at least one alkaline earth metal oxide or hydroxide, and water, or
(2) a quick-setting agent for a hydraulic binder, containing a combination of (A) a liquid quick-setting agent which contains aluminum sulfate or a hydrate thereof, an aluminum oxide or hydroxide, at least one organic acid, at least one alkaline earth metal oxide or hydroxide, and water; with (B) a non-slurry auxiliary quick-setting agent which contains powdery aluminum sulfate or a hydrate thereof.

The aforementioned "quick-setting agent" in the aforementioned (2) quick-setting agent for a hydraulic binder means not only a single composition containing the aforementioned (A) liquid quick-setting agent and the aforementioned (B) auxiliary quick-setting agent, but also a "kit" or a "system" formed from a combination before mixing the aforementioned (A) liquid quick-setting agent and the aforementioned (B) auxiliary quick-setting agent.

The aforementioned organic acid is preferably a monocarboxylic acid.

The aforementioned monocarboxylic acid is preferably formic acid or acetic acid.

A pH of the aforementioned (A) liquid quick-setting agent is preferably less than 7.

The aforementioned alkaline earth metal is preferably magnesium.

An alkali metal ion content contained in the quick-setting agent of the present invention is preferably less than 1% by mass (weight).

A halide ion content contained in the quick-setting agent of the present invention is preferably less than 0.1% by mass (weight).

The aforementioned (1) liquid quick-setting agent for a hydraulic binder or the aforementioned (A) liquid quick-setting agent preferably contains 30 to 50% by mass (weight) of aluminum sulfate or a hydrate thereof, 5 to 15% by mass (weight) of an aluminum oxide or hydroxide, 5 to 15% by mass (weight) of an organic acid, and 1 to 10% by mass (weight) of an alkaline earth metal oxide or hydroxide.

The aforementioned (B) non-slurry auxiliary quick-setting agent is preferably in the form of powder.

The aforementioned (B) non-slurry auxiliary quick-setting agent is preferably formed from only powdery aluminum sulfate or a hydrate thereof.

The present invention also relates to (B) a non-slurry auxiliary quick-setting agent which contains powdery aluminum sulfate or a hydrate thereof for (A) a liquid quick-setting agent which contains aluminum sulfate or a hydrate thereof, an aluminum oxide or hydroxide, at least one organic acid, at least one alkaline earth metal oxide or hydroxide, and water.

The present invention also relates to a method for rapidly curing a hydraulic binder comprising: mixing (A) a liquid quick-setting agent which contains aluminum sulfate or a hydrate thereof, an aluminum oxide or hydroxide, at least one organic acid, at least one alkaline earth metal oxide or hydroxide, and water and (B) a non-slurry auxiliary quick-setting agent which contains powdery aluminum sulfate or a hydrate thereof; and adding the mixture to the hydraulic binder.

In addition, the present invention also relates to a method for rapidly curing a hydraulic binder comprising: independently adding (A) a liquid quick-setting agent which contains aluminum sulfate or a hydrate thereof, an aluminum oxide or hydroxide, at least one organic acid, at least one alkaline earth metal oxide or hydroxide, and water, and (B) a non-slurry auxiliary quick-setting agent which contains powdery aluminum sulfate or a hydrate thereof, to the hydraulic binder.

The present invention also relates to a hydraulic binder cured by the aforementioned method for rapidly curing a hydraulic binder, and also relates to a construction structure containing the aforementioned cured hydraulic binder.

### Effects of the Invention

The aforementioned (1) liquid quick-setting agent for a hydraulic binder of the present invention is liquid, and the aforementioned (2) quick-setting agent for a hydraulic binder uses the aforementioned (A) liquid quick-setting agent. For this reason, they exhibit superior usability as compared with the case in which only a powdery quick-setting agent is used, and construction can be easily carried out. In addition, the aforementioned (2) quick-setting agent for a hydraulic binder exhibits a reduced occurrence of dust since a mixture of the aforementioned (A) liquid quick-setting agent and (B) auxiliary quick-setting agent is in the form of liquid as a whole. In addition, a hydraulic binder in which the quick-setting agent of the present invention is blended exhibits a superior adhesive property. For this reason, rebounding of the hydraulic binder is reduced, and a rebounded amount thereof (an amount of the hydraulic binder which drops off without adhering to the target) can be reduced.

In addition, the quick-setting agent of the present invention is not alkaline. For this reason, danger to public health is reduced, and a working environment can be improved. In addition, the quick-setting agent of the present invention is in no danger of leaking the alkaline components to the surrounding environment.

In addition, when the quick-setting agent of the present invention contains few alkali metal ions, an alkali-aggregate reaction in the hydraulic binder can be controlled. In addition, when the quick-setting agent of the present invention contains few halide ions, corrosion of rebars and steel stocks in the hydraulic binder can be controlled.

The quick-setting agent of the present invention can impart a good curing property to a hydraulic binder even under conditions which are difficult to carry out curing with conventional quick-setting agents, and can provide a cured product with superior strength. For example, even in the case of the temperature of a hydraulic binder being low, or even in the case of the presence of spring water, the hydraulic binder can be cured within a short period of time, and the necessary strength can be obtained.

In the present invention, the aforementioned (B) auxiliary quick-setting agent can increase the performance of the aforementioned (A) liquid quick-setting agent.

The method for rapidly curing a hydraulic binder of the present invention uses (A) a liquid quick-setting agent. For this reason, superior usability can be exhibited, as compared with the case using only a powdery quick-setting agent, and construction can be easily carried out. In addition, a mixture of the aforementioned (A) liquid quick-setting agent and the aforementioned (B) auxiliary quick-setting agent is in the form of liquid as a whole. For this reason, occurrence of dust is also reduced. In addition, the hydraulic binder in which the aforementioned (B) auxiliary quick-setting agent is blended exhibits a superior adhesive property, and for this reason, rebounding of the hydraulic binder is reduced, and a rebounded amount thereof can be reduced.

In addition, the method for rapidly curing a hydraulic binder of the present invention uses the (A) liquid quick-setting agent and (B) auxiliary quick-setting agent, which are not alkaline. For this reason, danger to public health is reduced, and an operation environment can be improved. In addition, the method of the present invention is in no danger of leaking the alkaline components from the hydraulic binder after it is cured, to the surrounding environment.

In accordance with the method for rapidly curing a hydraulic binder of the present invention, a hydraulic binder can be cured well even under conditions which are conventionally difficult to carry out construction, and can provide a cured product with superior strength. For example, even in the case of the temperature of a hydraulic binder being low, or even in the case of the presence of spring water, the hydraulic binder can be cured within a short period of time, and the necessary strength can be obtained.

### BRIEF DESCRIPTION OF DRAWINGS

[Fig. 1] Graphs showing changes in compressive strength of shotcrete in Reference Example 1 and Reference Example 2 over time.
[Fig. 2] Graphs showing changes in compressive strength of shotcrete in Example 1, Example 2, and Reference Example 3 over time.

### Best Modes for Carrying out the Invention

As a result of diligent studies, the present inventors discovered that by curing a hydraulic binder using:
(1) a liquid quick-setting agent for a hydraulic binder, comprising aluminum sulfate or a hydrate thereof, an aluminum oxide or hydroxide, at least one organic acid, at least one alkaline earth metal oxide or hydroxide, and water, or alternatively,
(2) a quick-setting agent for a hydraulic binder, comprising a combination of (A) a liquid quick-setting agent which contains aluminum sulfate or a hydrate thereof, an aluminum oxide or hydroxide, at least one organic acid, at least one alkaline earth metal oxide or hydroxide, and water; with (B) a non-slurry auxiliary quick-setting agent which contains powdery aluminum sulfate or a hydrate thereof,
   the hydraulic binder can be cured within a short period of time, and sufficient strength can be provided. The aforementioned combination is alkali-free, and has none of the disadvantages which conventional alkaline quick-setting agents have. In addition, in the aforementioned (2) quick-setting agent for a hydraulic binder, the combination of component (A) and component (B) is in the form of liquid, and has none of the disadvantages which conventional powdery quick-setting agents have.

### Hydraulic binder

The hydraulic binder in the present invention means a binder which can be cured by means of water. As examples thereof, mention may be made of mortar, concrete, and the like, in addition to cement and gypsum. As the cement, various types of Portland cement such as ordinary Portland cement, early-strength Portland cement, ultrahigh-early-strength Portland cement, moderate heat Portland cement, and low heat Portland cement; as well as Portland blast-furnace slag cement in which blast-furnace slag fine powders are mixed in Portland cement; fly ash cement in which fly ash is mixed in Portland cement; or the like can be used. Usually, mortar can be obtained by mixing water and fine aggregates such as sand or the like in cement, and concrete can be obtained by mixing water, fine aggregates and coarse aggregates such as gravel in cement. The hydraulic binders can be used as a single type or as a mixture of two or more types thereof.

As fine aggregates, natural sand, quartz sand, lime sand or the like can be used. The fine aggregates preferably have a maximum particle size of 2.5 mm or less. If the maximum particle size exceeds 2.5 mm, occurrence of rebounding during spraying may increase. As the coarse aggregates, river gravel, mountain gravel, lime gravel or the like can be used. The coarse aggregates preferably have a maximum particle size of 15 mm or less. If the maximum particle size exceeds 15 mm, occurrence of rebounding during spraying may increase. Therefore, the maximum particle size of the coarse aggregates preferably ranges from 8 mm to 15 mm.

In the case of using concrete as a hydraulic binder, the blending amount of water is preferably less than or equal to 60 parts by mass (weight), preferably less than or equal to 50 parts by mass (weight), more preferably less than or equal to 45 parts by mass (weight), further more preferably less than or equal to 42 parts by mass (weight), and in particular, preferably less than or equal to 40 parts by mass (weight), with respect to 100 parts by mass (weight) of concrete.

In the case of using concrete as a hydraulic binder, the temperature of concrete is preferably more than or equal to 15°C, more preferably more than or equal to 20°C, and further more preferably more than or equal to 25°C. It should be noted that by using (B) an auxiliary quick-setting agent described below, concrete at a relatively low temperature can also be cured well.

In the present invention, in order to improve fluidity of the hydraulic binder, a water-reducing agent may be blended in the hydraulic binder. The water-reducing agent may be in the form of either one of liquid or powder. In view of an operation property, a liquid one is preferable. As an example of the water-reducing agent, mention may be made of lignin sulfonic acid or a derivative thereof, as well as a high-performance water-reducing agent, and the like. The water-reducing agents may be used as a single type or in combination with two or more types thereof. In view of imparting fluidity, a high-performance water-reducing agent is preferably used.

As examples of the high-performance water-reducing agent, mention may be made of, for example, a polyol derivative such as polyethylene glycol; an aromatic sulfonic acid-based high-performance water-reducing agent such as an aromatic sulfonic acid such as naphthalenesulfonic acid and/or a formaldehyde condensate of an aromatic sulfonic acid; a polycarboxylic acid-based high-performance water-reducing agent; a melamine-based high-performance water-reducing agent; and a mixture thereof. Among these, a polycarboxylic acid-based high-performance water-reducing agent is preferable.

The usage amount of the water-reducing agent is not particularly limited. For example, in the case of using concrete as a hydraulic binder, the water-reducing agent is used in an amount preferably ranging from 0.01 to 5 parts by mass (weight), and more preferably ranging from 0.1 to 3 parts by mass (weight), with respect to 100 parts by mass (weight) of concrete. If the amount is below 0.01 parts by mass (weight), an effect of improving fluidity may be reduced. On the other hand, if the amount exceeds 5 parts by mass (weight), the hydraulic binder may be separated off.

In the case of using concrete as a hydraulic binder, a slump value of concrete is preferably 20 ± 5 cm, and more preferably 20 ± 3 cm.

### Quick-setting agent

The quick-setting agent of the present invention is:
(1) a liquid quick-setting agent for a hydraulic binder, comprising aluminum sulfate or a hydrate thereof, an aluminum oxide or hydroxide, at least one organic acid, at least one alkaline earth metal oxide or hydroxide, and water, or alternatively,
(2) a quick-setting agent for a hydraulic binder containing, as a main ingredient, (A) a liquid quick-setting agent for a hydraulic binder, comprising aluminum sulfate or a hydrate thereof, an aluminum oxide or hydroxide, at least one organic acid, at least one alkaline earth metal oxide or hydroxide, and water.

Aluminum sulfate or a hydrate thereof is represented by anhydrous aluminum sulfate Al₂(SO₄)₃ or aluminum sulfate hydrate Al₂(SO₄)₃˙nH₂O, and a material in which n ranges from 0 to 20 can be preferably used. A material having n = 5 to 20 is preferable, and a material having n = 14 to 18 is more preferable. A material containing aluminum, in an amount of 17% by mass (weight) or more, calculated in terms of an amount of Al₂O₃, is particularly preferable.

An aluminum oxide or hydroxide is not particularly limited. As examples thereof, mention may be made of, for example, aluminum oxide (Al₂O₃), aluminum hydroxide (Al(OH)₃), and the like. Aluminum hydroxide is preferable. Amorphous aluminum hydroxide is advantageously used as an aluminum hydroxide. An aluminum hydroxide can also be used in the form of aluminum hydroxycarbonate, aluminum hydroxysulfate, or the like.

An organic acid is not particularly limited. A carboxylic acid is preferable. As examples of the carboxylic acid, mention may be made of a monocarboxylic acid such as formic acid, acetic acid, or propionic acids; a dicarboxylic acid such as oxalic acid, malonic acid, succinic acid, glutaric acid, adipic acid, pimelic acid, maleic acid, fumaric acid, or phthalic acid; a tricarboxylic acid such as trimellitic acid; and the like. A monocarboxylic acid is more preferable. As a monocarboxylic acid, formic acid or acetic acid is preferable. The organic acid may be in the form of a salt. The organic acids may be used as a single type or in combination with two or more types thereof.

The pH of the quick-setting agent of the present invention is preferably 7 or less, more preferably 6 or less, further more preferably 5 or less, further more preferably 4 or less, and in particular, preferably 3 or less. Use of an acidic quick-setting agent can inhibit danger to public health which conventional alkaline quick-setting agents cause.

An alkaline earth metal in an alkaline earth metal oxide or hydroxide is not limited. Magnesium is preferable therefor. A magnesium oxide is not particularly limited, and as an example thereof, mention may be made of magnesium oxide (MgO). A magnesium hydroxide is not particularly limited, and as an example thereof, mention may be made of magnesium hydroxide (Mg(OH)₂). The alkaline earth metal oxides or hydroxides may be used as a single type or in combination with two or more types thereof.

The presence of the alkaline earth metal oxide or hydroxide can improve a curing property of the hydraulic binder. Namely, by reacting the alkaline earth metal oxide or hydroxide with the organic acid, the temperature of the quick-setting agent can be increased, and therefore, the temperature of the hydraulic binder can also be increased. Thereby, curing of the hydraulic binder can be accelerated. In addition, the alkaline earth metal oxide or hydroxide can improve storage stability of the quick-setting agent.

The quick-setting agent of the present invention preferably has an alkali metal ion content which is less than 1% by mass (weight). This means that the supply source of alkali metals almost non-exists in the quick-setting agent. As examples of the supply source of alkali metals, mention may be made of, for example, an oxide, a peroxide, a hydroxide, a nitrate, a phosphate, a sulfate, a carbonate, an oxalate, or a silicate of lithium, sodium, potassium, rubidium, or cesium, and the like. The sodium ion content and potassium ion content are preferably less than 1% by mass (weight), respectively. Thereby, the quick-setting agent of the present invention can inhibit the non-desirable alkali-aggregate reaction.

In addition, the quick-setting agent of the present invention preferably has a halide ion content which is less than 0.1% by mass (weight). This means that the supply source of halide ions almost non-exists in the quick-setting agent. As examples of the supply source of halide ions, mention may be made of, for example, a fluoride, a chloride, a bromide, and an iodide of a metal, as well as a fluorine salt, a hydrochloride salt, a bromate, and an iodate of a metal, and the like. The chloride ion content is preferably less than 0.1% by mass (weight). Thereby, the quick-setting agent of the present invention can inhibit non-desirable corrosion of rebars and steel stocks.

The aforementioned (1) liquid quick-setting agent for a hydraulic binder or the aforementioned (A) liquid quick-setting agent preferably contains 30 to 50% by mass (weight) of aluminum sulfate or a hydrate thereof, 5 to 15% by mass (weight) of an aluminum oxide or hydroxide, 5 to 15% by mass (weight) of an organic acid, and 1 to 10% by mass (weight) of an alkaline earth metal oxide or hydroxide. The aforementioned liquid quick-setting agent more preferably contains 30 to 45% by mass (weight) of aluminum sulfate or a hydrate thereof, 5 to 12% by mass (weight) of an aluminum oxide or hydroxide, 5 to 12% by mass (weight) of an organic acid, and 1 to 4% by mass (weight) of an alkaline earth metal oxide or hydroxide. The quick-setting agent of the present invention contains water, in addition to the aforementioned components. The water content preferably ranges from 10 to 27% by mass (weight) on the basis of the quick-setting agent.

The molar ratio of the aluminum element with respect to the organic acid in the quick-setting agent is preferably less than 0.65, is more preferably 0.38 or more but less than 0.65, more preferably ranges from 0.38 to 0.60, and in particular, preferably ranges from 0.50 to 0.60. In addition, the aluminum element content in the quick-setting agent is preferably less than 14% by mass (weight), more preferably less than 13% by mass (weight), and further more preferably less than 12% by mass (weight), calculated on the basis of Al₂O₃.

The quick-setting agent of the present invention can optionally contain other components. As examples of optional components, mention may be made of, for example, a hydroxymonocarboxylic acid such as lactic acid, hydroxybutyric acid, salicylic acid, or gluconic acid, or a salt thereof; an amino acid such as aspartic acid or glutamic acid, or a salt thereof; an alkanolamine such as monoethanolamine or diethanolamine, or a salt thereof; and a chelating agent such as ethylenediamine tetraacetate. The amount of the optional components is not particularly limited. The amount may range from 0.01 to 5% by mass (weight), and preferably ranges from 0.1 to 1% by mass (weight), on the basis of the quick-setting agent.

The quick-setting agent of the present invention can be used in an amount ranging from 0.001 to 10 parts by mass (weight), preferably ranging from 0.01 to 5 parts by mass (weight), and more preferably ranging from 0.01 to 1 parts by mass (weight), with respect to 100 parts by mass (weight) of the hydraulic binder. In addition, when the hydraulic binder is concrete, the amount of the quick-setting agent preferably ranges from 3 to 10 parts by mass (weight), more preferably ranges from 5 to 9 parts by mass (weight), and further more preferably ranges from 7 to 8 parts by mass (weight), with respect to 100 parts by mass (weight) of cement contained in the hydraulic binder.

In general, development of strength of the hydraulic binder for about 4 hours immediately after the quick-setting agent is mixed with the hydraulic binder is mainly obtained by quick-setting behavior due to the production of ettringite. Subsequently, strength exponentially increases by means of hydration effects of the hydraulic binder, and in particular, cement. Therefore, the performance of the quick-setting agent is represented by the total of the aforementioned two types of strength. The quick-setting agent used in the present invention can shorten the starting time of the hydration reaction. For this reason, the hydration reaction of the hydraulic binder is started from about 3 hours after spraying, and the initial strength can be improved within a relatively short period of time. Therefore, the quick-setting agent of the present invention exhibits superior development of strength of the hydraulic binder for 3 to 24 hours after starting use, and in particular, for 4 to 6 hours after starting use.

### Auxiliary quick-setting agent

The aforementioned (2) quick-setting agent for a hydraulic binder of the present invention uses (B) a non-slurry auxiliary quick-setting agent containing powdery aluminum sulfate or a hydrate thereof as an accessory component. The aforementioned (B) auxiliary quick-setting agent increases the effects of quick-setting the aforementioned (A) liquid quick-setting agent. Therefore, by using the aforementioned (A) liquid quick-setting agent in combination with the aforementioned (B) auxiliary quick-setting agent, the hydraulic binder can be cured within a short period of time. In particular, the aforementioned (B) auxiliary quick-setting agent can contribute greatly to improvement of the initial strength for about one hour after starting use thereof. Therefore, for example, even when the temperature of the hydraulic binder is low, or even when spring water is present, the hydraulic binder is cured within a short period of time and the necessary strength can be obtained.

Therefore, one mode of the present invention corresponds to (B) a non-slurry auxiliary quick-setting agent which contains powdery aluminum sulfate or a hydrate thereof, for use in (A) a liquid quick-setting agent for a hydraulic binder, which contains aluminum sulfate or a hydrate thereof, an aluminum oxide or hydroxide, at least one organic acid, at least one alkaline earth metal oxide or hydroxide, and water.

The aforementioned (B) auxiliary quick-setting agent is non-slurry, and preferably in the form of powder. In particular, the aforementioned (B) auxiliary quick-setting agent preferably consists of only powdery aluminum sulfate or a hydrate thereof. Aluminum sulfate or a hydrate thereof is represented by anhydrous aluminum sulfate Al₂(SO₄)₃ or aluminum sulfate hydrate Al₂(SO₄)₃˙nH₂O. A material in which n ranges from 0 to 20 can be preferably used, a material in which n = 5 to 20 is preferable, and a material in which n = 14 to 18 is more preferable. A material containing aluminum in an amount of 17% by mass (weight) or more, calculated in terms of an amount of Al₂O₃ is, in particular, preferable. Aluminum sulfate or a hydrate thereof is also contained in the aforementioned (A) liquid quick-setting agent, but is different from that contained in the aforementioned (B) auxiliary quick-setting agent in view of the following point. While the aforementioned aluminum sulfate or a hydrate thereof contained in the aforementioned (A) liquid quick-setting agent is in the form of a solution or dispersion thereof, the aforementioned aluminum sulfate or a hydrate thereof contained in the aforementioned (B) auxiliary quick-setting agent is in the form of a non-solution or non-slurry, preferably in the form of a powder.

The aforementioned (B) auxiliary quick-setting agent can be used in an amount ranging from 0.0001 to 5 parts by mass (weight), preferably ranging from 0.001 to 3 parts by mass (weight), and more preferably ranging from 0.01 parts by mass (weight) to 1 part by mass (weight), with respect to 100 parts by mass (weight) of the hydraulic binder. In addition, when the hydraulic binder is concrete, the amount of the auxiliary quick-setting agent preferably ranges from 0.5 to 5.0 parts by mass (weight), more preferably ranges from 1.0 to 4.0 parts by mass (weight), and further more preferably ranges from 1.5 to 3.0 parts by mass (weight), with respect to 100 parts by mass (weight) of the hydraulic binder.

### Method for rapidly curing a hydraulic binder

In one mode of the present invention, (A) a liquid quick-setting agent which contains aluminum sulfate or a hydrate thereof, an aluminum oxide or hydroxide, at least one organic acid, at least one alkaline earth metal oxide or hydroxide, and water and (B) a non-slurry auxiliary quick-setting agent which contains powdery aluminum sulfate or a hydrate thereof are mixed, and the mixture is added to a hydraulic binder, thereby, rapidly curing a hydraulic binder. The mixture of the aforementioned (A) liquid quick-setting agent and (B) auxiliary quick-setting agent is in the form of a liquid as a whole, and is preferably in the form of a solution or dispersion in which the aforementioned (B) auxiliary quick-setting agent is dissolved or dispersed in the aforementioned (A) liquid quick-setting agent.

In another mode of the present invention, (A) a liquid quick-setting agent which contains aluminum sulfate or a hydrate thereof, an aluminum oxide or hydroxide, at least one organic acid, at least one alkaline earth metal oxide or hydroxide, and water, and (B) a non-slurry auxiliary quick-setting agent which contains powdery aluminum sulfate or a hydrate thereof are independently added to a hydraulic binder, and thereby, the hydraulic binder is rapidly cured.

In accordance with the aforementioned methods, the hydraulic binders can be cured within a short period of time and a necessary strength can be obtained, even under the conditions which are conventionally difficult to carry out construction, as in the case where the temperature of the hydraulic binder is low, or as in the case where spring water is present. As the aforementioned (A) liquid quick-setting agent and the aforementioned (B) auxiliary quick-setting agent, those described above can be used.

In addition, the present invention also relates to a hydraulic binder cured by the aforementioned method, and relates to a construction structure containing the aforementioned cured hydraulic binder. The aforementioned construction structure is not particularly limited. As examples thereof, mention may be made of, for example, a house, a building, a road, a tunnel, a bridge, a breakwater, a dike and the like.

### INDUSTRIAL APPLICABILITY

The (liquid) quick-setting agents and auxiliary quick-setting agents, for use in hydraulic binders, and methods for rapidly curing the hydraulic binders according to the present invention can be used in shotcrete in tunnels and underground structures, shotcrete as linings in tunnels, and spraying mortar or shotcrete for slope protection and in caisson type piles.

### EXAMPLES

Hereinafter, the present invention is described in detail with reference to Examples and Comparative Examples. It should be understood that the present invention is not limited to these Examples.

### Preparation of shotcrete 1

46 parts by mass (weight) of water, 226 parts by mass (weight) of fine aggregates, 155 parts by mass (weight) of coarse aggregates, 14 parts by mass (weight) of fly ash, and 1.3 parts by mass (weight) of a high-performance water-reducing agent (manufactured by Sika Ltd.) were mixed and kneaded with 100 parts by mass (weight) of Portland cement, and thereby, shotcrete was prepared. The temperature of the concrete was adjusted to 26.5°C.

### Preparation of shotcrete 2

44 parts by mass (weight) of water, 221 parts by mass (weight) of fine aggregates, 165 parts by mass (weight) of coarse aggregates, 14 parts by mass (weight) of fly ash, and 0.7 parts by mass (weight) of a high-performance water-reducing agent (manufactured by Sika Ltd.) were mixed and kneaded with 100 parts by mass (weight) of Portland cement, and thereby, shotcrete was prepared. The temperature of the concrete was adjusted to 21.5°C.

### Preparation of liquid quick-setting agent

26.60% by mass (weight) of water, 3.70% by mass (weight) of magnesium hydroxide, 12.50% by mass (weight) of formic acid (85%), 12.00% by mass (weight) of aluminum hydroxide (17% Al₂O₃), 45.00% by mass (weight) of aluminum sulfate, and 0.20% by mass (weight) of sodium gluconate were mixed, and thereby, a liquid quick-setting agent was prepared.

### Reference Example 1

The aforementioned liquid quick-setting agent was added to shotcrete 1, in an amount of 6 parts by mass (weight) of the aforementioned liquid quick-setting agent with respect to 100 parts by mass (weight) of Portland cement contained in the aforementioned shotcrete 1. The mixture was kneaded.

### Reference Example 2

The aforementioned liquid quick-setting agent was added to shotcrete 1 in an amount of 8 parts by mass (weight) of the aforementioned liquid quick-setting agent with respect to 100 parts by mass (weight) of Portland cement contained in the aforementioned shotcrete 1. The mixture was kneaded.

### Evaluation 1

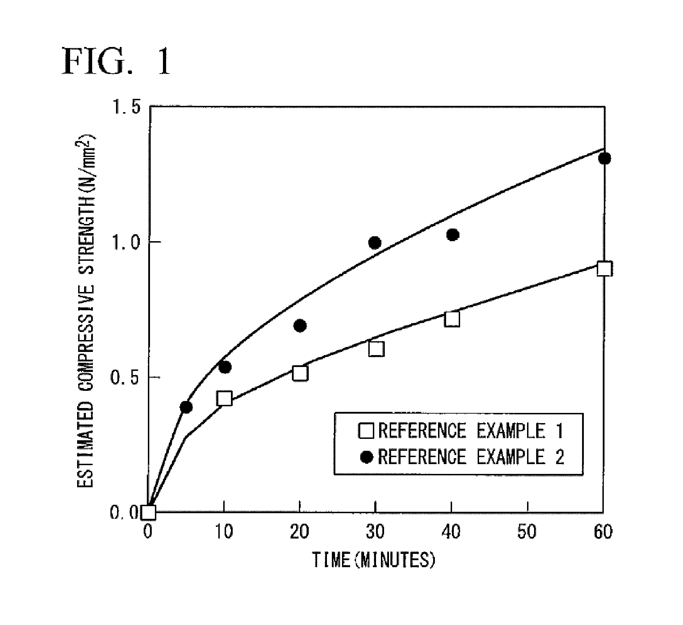

Compressive strength change of the shotcrete of each of Reference Example 1 and Reference Example 2 was measured over time. In particular, shotcrete 1 after completion of kneading with the aforementioned liquid quick-setting agent was subjected to an ultra-initial stage strength test on the basis of AFG 1000, 5 minutes, 10 minutes, 20 minutes, 30 minutes, 40 minutes, and 60 minutes after spraying. Thereby, compressive strength (N/mm²) was measured. The results are shown in Table 1 and Fig. 1.

**Table 1**

| Time (minutes) | 5 | 10 | 20 | 30 | 40 | 60 |
|---|---|---|---|---|---|---|
| Reference Example 1 | - | 0.42 | 0.51 | 0.60 | 0.71 | 0.90 |
| Reference Example 2 | 0.39 | 0.54 | 0.69 | 1.00 | 1.03 | 1.31 |

Reference Example 1 and Reference Example 2, each containing the aforementioned liquid quick-setting agent, exhibit superior performance of strength. In particular, as is apparent from the results shown in Table 1, Reference Example 2 containing an increased amount of the aforementioned liquid quick-setting agent than Reference Example 1 exhibits the greater initial strength within one hour after curing starts, which increases by about 30%, as compared with that of Reference Example 1.

### Example 1

The aforementioned liquid quick-setting agent and aluminum sulfate powder were added to shotcrete 2 in amounts of 6 parts by mass (weight) of the aforementioned liquid quick-setting agent and 1.5 parts by mass (weight) of aluminum sulfate powder with respect to 100 parts by mass (weight) of Portland cement contained in the aforementioned shotcrete 2. The mixture was kneaded.

### Example 2

The aforementioned liquid quick-setting agent and aluminum sulfate powder were added to shotcrete 2 in amounts of 6 parts by mass (weight) of the aforementioned liquid quick-setting agent and 3.0 parts by mass (weight) of aluminum sulfate powder to 100 parts by mass (weight) of Portland cement contained in the aforementioned shotcrete 2. The mixture was kneaded.

### Reference Example 3

The aforementioned liquid quick-setting agent was added to shotcrete 2 in an amount of 6 parts by mass (weight) of the aforementioned liquid quick-setting agent with respect to 100 parts by mass (weight) of Portland cement contained in the aforementioned shotcrete 2. The mixture was kneaded.

### Evaluation 2

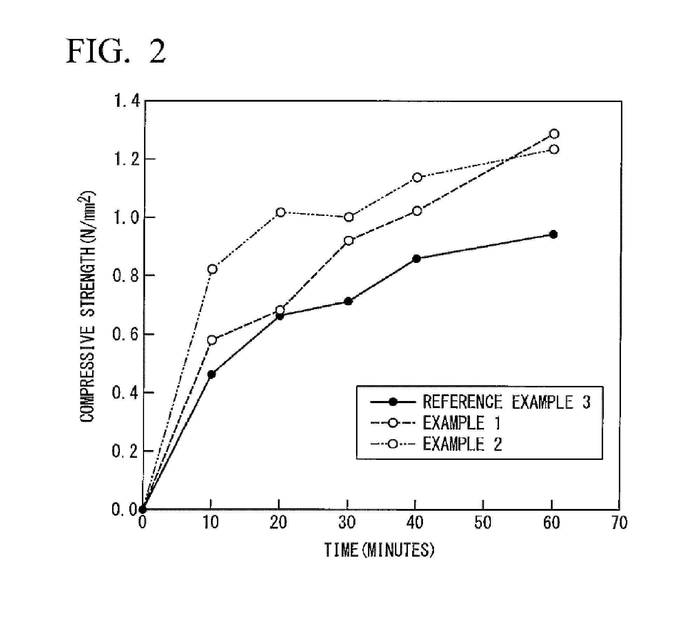

Compressive strength change of the shotcrete of each of Example 1, Example 2, and Reference Example 3 was measured over time. In particular, shotcrete 2 after completion of kneading with the aforementioned liquid quick-setting agent and aluminum sulfate powder in the case of Example 1 and Example 2, and shotcrete 2 after completion of kneading with the aforementioned liquid quick-setting agent in the case of Reference Example 3 were subjected to an ultra-initial strength test on the basis of AFG 1000, 5 minutes, 10 minutes, 20 minutes, 30 minutes, 40 minutes, and 60 minutes after spraying. Thereby, compressive strength (N/mm²) was measured. The results are shown in Table 2 and Fig. 2.

**Table 2**

| Time (minutes) | 10 | 20 | 30 | 40 | 60 |
|---|---|---|---|---|---|
| Example 1 | 0.58 | 0.68 | 0.92 | 1.03 | 1.29 |
| Example 2 | 0.82 | 1.02 | 1.00 | 1.14 | 1.24 |
| Reference Example 3 | 0.46 | 0.66 | 0.71 | 0.86 | 0.95 |

As is apparent from Table 2, Example 1 and Example 2, each containing aluminum sulfate powder, exhibit superior early expression performance of strength, as compared with Reference Example 3 containing no aluminum sulfate powder. In particular, Example 1 and Example 2 exhibit superior strength of shotcrete within one hour after curing starts, which increases by 30% to 80%, as compared with that of Reference Example 3.

In addition, with respect to strength of shotcrete within 40 minutes after curing starts, Example 2 using aluminum sulfate powder in double the amount of that of Example 1 exhibits superior strength with respect to that of Example 1.

### Evaluation 3

Quick-setting agents having the compositions shown below were prepared. The numerical values shown in Table 3 are based on % by mass (weight). In particular, water under a non-heated condition was used. In the case of Examples containing magnesium hydroxide, magnesium hydroxide was added thereto to form a slurry. Formic acid or sulfuric acid was added to the slurry. Thereby, the temperature of the mixture greatly increased. Subsequently, aluminum hydroxide and aluminum sulfate were added thereto. The mixture was stirred for about one hour until the temperature of the mixture decreased to about 40°C after the reaction was completed. Thereby, a composition of each of Examples and Comparative Examples containing dispersed fine powder was obtained. Each of Example 4, Comparative Example 2 and Comparative Example 4 had an amount of aluminum sulfate which increased by 3% by mass (weight), as compared with that of each of Example 3, Comparative Example 1 and Comparative Example 3.

**Table 3**

| | Example 3 | Example 4 | Comparative Example 1 | Comparative Example 2 | Comparative Example 3 | Comparative Example 4 |
|---|---|---|---|---|---|---|
| Aluminum sulfate | 45 | 48 | 45 | 48 | 45 | 48 |
| Aluminum hydroxide | 12 | 12 | 12 | 12 | 12 | 12 |
| Magnesium hydroxide | 4 | 4 | - | - | 4 | 4 |
| Formic acid | 12 | 12 | 12 | 12 | - | - |
| Sulfuric acid | - | - | - | - | 12 | 12 |
| Water | 27 | 24 | 31 | 28 | 27 | 24 |

| | | | | | | |
|---|---|---|---|---|---|---|
| * Aluminum sulfate: 17% Al₂O₃ | | | | | | |

Mortar tests were carried out using Examples 3 and 4 and Comparative Examples 1 to 3. Comparative Example 4 could not be subjected to the mortar test since solidification occurred during the preparation.

In the mortar tests, the quick-setting agent of each of Examples 3 and 4 and Comparative Examples 1 to 3 was added to a conventional mortar having a specified composition in an amount of 6 parts by mass (weight) of the aforementioned quick-setting agent with respect to 100 parts by mass (weight) of cement contained in the aforementioned mortar. In particular, first, 500 g of cement (CEM I 42.5, manufactured by Wildegg Company (Switzerland)), 500 g of pulverized limestone (particle size: 0.1 to 1.8 mm), 500 g of silica sand (particle size: 0.7 to 1.2 mm), and 500 g of silica sand (particle size: 1.5 to 2.2 mm) were preliminarily mixed under a dry state. Subsequently, 240 g of water containing 1.2% by mass (weight) of a plasticizer (Viscocrete SC-303, manufactured by Sika Switzerland AG (Switzerland) containing 0.1% of a defoaming agent (Pronal 7535)) was added to the aforementioned preliminary mixture under a dry state (w/c = 0.48), and the mixture was mixed for 2 minutes. Thereby, a mortar slurry was obtained. Subsequently, mixing was stopped for 30 seconds. The aforementioned quick-setting agent in an amount of 6 parts by mass (weight) was added to the aforementioned mortar slurry.

Subsequently, a triangular prism having a size of 4 x 4 x 16 cm was prepared using the aforementioned mortar. Compressive strength of the aforementioned triangular prism was measured in accordance with EN 196-1 after 4, 6 and 24 hours. The results are shown in Table 4. The compressive strength at the initial stage, namely the compressive strength after 4 hours and after 6 hours is particularly important. The value of compressive strength after 24 hours is a reference value.

**Table 4**

| | After 4 hours | After 6 hours | After 24 hours |
|---|---|---|---|
| Example 3 | 0.9 | 2.2 | 14.9 |
| Example 4 | 0.8 | 2.8 | 15.7 |
| Comparative Example 1 | 0.9 | 2.5 | 15.2 |
| Comparative Example 2 | 0.9 | 2.4 | 15.7 |
| Comparative Example 3 | 0.7 | 1.5 | 17.9 |
| Comparative Example 4 | n.m. | n.m. | n.m. |

| | | | |
|---|---|---|---|
| * n.m.: not measured | | | |

As is apparent from Table 4, in the case of combining with magnesium hydroxide, in Example 4 in which the amount of aluminum sulfate is increased, the compressive strength after 6 hours is remarkably increased. When Example 4 in which magnesium hydroxide is contained and the amount of aluminum sulfate is increased by 3% by mass (weight) is compared with Comparative Example 2 in which no magnesium hydroxide is contained and the amount of aluminum sulfate is increased by 3% by mass (weight), the compressive strength after 6 hours in the former is about 1.2 times that in the latter.

In addition, in the case of using sulfuric acid instead of formic acid, as is apparent from comparison of Example 3 and Comparative Example 3, the compressive strength in the initial stage (after 4 hours and after 6 hours) is remarkably reduced. The increase of the compressive strength after 24 hours is caused by increasing a sulfate due to the addition of sulfuric acid, and this is not a surprising result.

## Claims

1. A liquid quick-setting agent for a hydraulic binder, comprising aluminum sulfate or a hydrate thereof, an aluminum oxide or hydroxide, at least one organic acid, at least one alkaline earth metal oxide or hydroxide, and water.

2. The liquid quick-setting agent for a hydraulic binder according to Claim 1, wherein said organic acid is a monocarboxylic acid.

3. The liquid quick-setting agent for a hydraulic binder according to Claim 2, wherein said monocarboxylic acid is formic acid or acetic acid.

4. The liquid quick-setting agent for a hydraulic binder according to any one of Claims 1 to 3, having a pH which is less than 7.

5. The liquid quick-setting agent for a hydraulic binder according to any one of Claims 1 to 4, wherein said alkaline earth metal is magnesium.

6. The liquid quick-setting agent for a hydraulic binder according to Claim 1, comprising 30 to 50% by mass of aluminum sulfate or a hydrate thereof, 5 to 15% by mass of an aluminum oxide or hydroxide, 5 to 15% by mass of an organic acid, and 1 to 10% by mass of an alkaline earth metal oxide or hydroxide.

7. A quick-setting agent for a hydraulic binder, comprising a combination of (A) a liquid quick-setting agent which contains aluminum sulfate or a hydrate thereof, an aluminum oxide or hydroxide, at least one organic acid, at least one alkaline earth metal oxide or hydroxide, and water; with (B) a non-slurry auxiliary quick-setting agent which contains powdery aluminum sulfate or a hydrate thereof.

8. The quick-setting agent for a hydraulic binder according to Claim 7, wherein said (A) liquid quick-setting agent comprises 30 to 50% by mass of aluminum sulfate or a hydrate thereof, 5 to 15% by mass of an aluminum oxide or hydroxide, 5 to 15% by mass of an organic acid, and 1 to 10% by mass of an alkaline earth metal oxide or hydroxide.

9. The quick-setting agent for a hydraulic binder according to Claim 7 or 8, wherein said (B) non-slurry auxiliary quick-setting agent is in the form of powder.

10. The quick-setting agent for a hydraulic binder according to any one of Claims 7 to 9, wherein said (B) non-slurry auxiliary quick-setting agent consists of powdery aluminum sulfate or a hydrate thereof.

11. The quick-setting agent for a hydraulic binder according to any one of Claims 1 to 10, having an alkali metal ion content which is less than 1% by mass.

12. The quick-setting agent for a hydraulic binder according to any one of Claims 1 to 11, having a halide ion content which is less than 0.1% by mass.

13. A non-slurry auxiliary quick-setting agent comprising powdery aluminum sulfate or a hydrate thereof (B), for use in (A) a liquid quick-setting agent which contains aluminum sulfate or a hydrate thereof, an aluminum oxide or hydroxide, at least one organic acid, at least one alkaline earth metal oxide or hydroxide, and water.

14. A method for rapidly curing a hydraulic binder comprising: mixing (A) a liquid quick-setting agent which contains aluminum sulfate or a hydrate thereof, an aluminum oxide or hydroxide, at least one organic acid, at least one alkaline earth metal oxide or hydroxide, and water and (B) a non-slurry auxiliary quick-setting agent which contains powdery aluminum sulfate or a hydrate thereof; and adding the mixture to the hydraulic binder.

15. A method for rapidly curing a hydraulic binder comprising: independently adding (A) a liquid quick-setting agent which contains aluminum sulfate or a hydrate thereof, an aluminum oxide or hydroxide, at least one organic acid, at least one alkaline earth metal oxide or hydroxide, and water, and (B) a non-slurry auxiliary quick-setting agent which contains powdery aluminum sulfate or a hydrate thereof, to the hydraulic binder.

16. A hydraulic binder cured by the method for rapidly curing a hydraulic binder as recited in Claim 14 or Claim 15.

17. A construction structure comprising the hydraulic binder cured as recited in Claim 16.
